# EUROPÄISCHE PATENTSCHRIFT

(11) **EP 2 135 383 B1**
(45) Veröffentlichungstag und Bekanntmachung des Hinweises auf die Patenterteilung: **03.08.2011**
(21) Anmeldenummer: 08715772.3
(22) Anmeldetag: 14.02.2008
(51) Int. Cl.: H04L 5/02, H04L 27/26, H04L 1/24

(54) **VORRICHTUNG UND VERFAHREN ZUR ERMITTLUNG EINES ÜBERTRAGUNGSVERHALTENS VON UNTERKANÄLEN**
DEVICE AND METHOD FOR DETERMINING A TRANSMISSION BEHAVIOR OF SUB-CHANNELS
DISPOSITIF ET PROCÉDÉ POUR DÉTERMINER LE COMPORTEMENT EN TRANSMISSION DE SOUS- CANAUX

(30) Priorität: 06.03.2007 DE 102007010868
(43) Veröffentlichungstag der Anmeldung: 23.12.2009
(73) Patentinhaber: Rohde & Schwarz GmbH & Co. KG, 81671 München (DE)
(72) Erfinder: SCHWARZ, Klaus-Dieter, 85630 Neukeferloh (DE); BRAUN, Thomas, 81739 München (DE)
(74) Vertreter: Körfer, Thomas
(86) Internationale Anmeldenummer: PCT/EP2008/001136
(87) Internationale Veröffentlichungsnummer: WO 2008/107066

(56) Entgegenhaltungen:
- EP-A- 0 969 623
- WO-A-2006/092852
- US-A- 6 028 894
- US-A1- 2003 032 439

## Beschreibung

Die Erfindung betrifft eine Vorrichtung und ein Verfahren zur Ermittlung eines Übertragungsverhaltens von Unterkanälen eines Übertragungskanals in einem Funkkommunikationssystem.

Aus DE 100 43 894 A1 und WO2006/092852A sind je ein Verfahren und eine Messvorrichtung zur Messung des Spektrums in Nachbarkanälen bekannt.

Architekturen der dritten und weiteren Mobilfunkgeneration (UMTS, 3GPP-LTE) basieren vor allem auf dem OFDM- und dem OFDMA-Modulationsverfahren, welches Mehrträgermodulation beim OFDM-Verfahren mit den Mehrfachzugriffsverfahren FDMA/TDMA kombiniert. Beim den OFDM- und OFDMA-Modulationsverfahren wird für die Übertragung von Information in einem Übertragungskanal statt eines einzelnen Signalträgers eine vergleichsweise große Anzahl von Signalunterträgern, welche Unterkanälen des Übertragungskanals zugewiesen sind, gleichzeitig moduliert und codiert.

Je nach Qualität der Unterkanäle des Übertragungskanals können die Signalunterträger mit unterschiedlicher Modulation und Codierung betrieben werden. Um eine effiziente Ausnutzung des Übertragungskanals zu erreichen, sind hinsichtlich des Übertragungsverhaltens der Übertragungskanals Kodierung, Modulation und/oder Amplitude der Signalunterträger anpassbar. Das bedeutet, dass die Sendeleistung mittels gezielter

Leistungssteuerung oder Leistungsregelung zur Minimierung von Interferenzen im Übertragungskanal und zur Verbesserung der Nutzleistung der Signalunterträger an unterschiedliches Übertragungsverhalten des Übertragungskanals angepasst werden kann. Dazu ist es erforderlich, das Übertragungsverhalten des Übertragungskanals, insbesondere der Unterkanäle, zu kennen.

Zur Ermittlung des Übertragungsverhaltens der Unterkanäle des Übertragungskanals in einem Funkkommunikationssystems werden zunächst Daten umfassende Signalunterträger zur Unterbringung in den Unterkanälen erzeugt. Nach erfolgter Übertragung der Daten durch den Übertragungskanal werden die Signalunterträger und/oder die mittels der Signalunterträger übertragenen Daten auf Fehler untersucht und zur Ermittlung des Übertragungsverhaltens der Übertragungskanals analysiert.

Um das Verhalten des Übertragungskanals und dessen Unterkanäle bei Vorliegen verschiedenartiger Störparameter, welche insbesondere zeit- und/oder ortsabhängig variieren, und/oder verschiedenartiger Parameter der Signaldatenträger, insbesondere Modulations- , Kodierungs- und/oder Amplitudenparameter, zu untersuchen, ist es üblich, für jede Parameterkonfiguration bezüglich eines der Störparameter und/oder eines der Parameter der Signaldatenträger eine separate Untersuchung durchzuführen.

Der Erfindung liegt somit die Aufgabe zugrunde, eine Vorrichtung und ein Verfahren anzugeben, womit das Übertragungsverhalten von Unterkanälen eines Übertragungskanals in einem Funkkommunikationssystem, insbesondere bei Vorliegen verschiedenartiger Störparameter, besonders kostengünstig und aufwandsarm sowie zügig und zuverlässig ermittelbar ist.

Bezüglich der Vorrichtung wird die Aufgabe erfindungsgemäß gelöst durch die Merkmale des Anspruchs 1. Vorteilhafte Weiterbildungen sind Gegenstand der hierauf rückbezogenen Unteransprüche.

Bezüglich des Verfahrens wird die Aufgabe erfindungsgemäß gelöst durch die Merkmale des Anspruchs 12. Vorteilhafte Weiterbildungen sind Gegenstand der hierauf rückbezogenen Unteransprüche.

Zur Ermittlung des Übertragungsverhaltens von Unterkanälen eines Übertragungskanals in einem Funkkommunikationssystem, insbesondere einem Mobilkommunikationssystem, werden zunächst zum Aufbau des Übertragungskanals im Funkkommunikationssystem Signalunterträger, welche Daten aufweisen, erzeugt und in den Unterkanälen des Übertragungskanals untergebracht. Dabei belegt jeder Unterkanal einen Teilbandbreitenbereich eines Gesamtbandbreitenbereichs, welcher dem Übertragungskanal zugewiesen ist, wobei sich die Teilbandbreitenbereiche nicht überlappen und spektral voneinander beabstandet auf dem Gesamtbandbreitenbereich angeordnet sind. Des Weiteren werden den Signalunterträgern beizumischende Störer erfindungsgemäß derart erzeugt, dass die Störer in der Bandbreite jeweils auf den Teilbandbreitenbereich desjenigen Unterkanals begrenzt sind, welchem die Störer zugewiesen sind. Damit überlappen sich die dem jeweiligen Teilbandbreitenbereich zugewiesenen Störer in der Bandbreite nicht und sind zudem spektral voneinander beabstandet.

Zur Durchführung des Verfahrens sind eine Sende-/Empfangseinrichtung und zumindest ein Endgerät im Funkkommunikationssystem vorgesehen, wobei der Übertragungskanal zwischen der Sende-/Empfangseinrichtung und dem Endgerät durch Erzeugung der Signalunterträger, welche die Daten umfassen, aufgebaut wird.

Die mit der Erfindung erzielten Vorteile bestehen insbesondere darin, dass das Übertragungsverhalten für jeden einzelnen Unterkanal des Übertragungskanals simultan ermittelbar ist, selbst dann, wenn der Übertragungskanal mit Störern verschiedenartiger Störparameter, beispielsweise unterschiedlichen Störsignalen und/oder Störrauschen und/oder mit Signalunterträgern verschiedenartiger Parameter, beispielsweise Modulations-, Kodier- und/oder Amplitudenparameter, beaufschlagt wird. Ferner wird durch die voneinander beabstandete Anordnung unmittelbar und mittelbar benachbarter Teilbandbreitenbereiche auf dem zur Verfügung gestellten Gesamtbandbreitenbereich vermieden, dass die Teilbandbreitenbereiche überlappen.

Durch die Beabstandung unmittelbar oder mittelbar benachbarter Teilbandbreitenbereiche wird zudem verhindert, dass Nebenwellen eines Signaldatenträgers auf einem diesem zugeordneten Teilbandbreitenbereich andere in benachbarten Teilbandbreitenbereichen untergebrachte Signaldatenträger beeinflussen. Außerdem ist durch die erfindungsgemäße Vorrichtung und das erfindungsgemäße Verfahren die Möglichkeit gegeben, durch simultane Ermittlung des Übertragungsverhaltens der Unterkanäle des Übertragungskanals die Parameter der Signalunterträger besonders zügig an die diesen zugewiesenen Unterkanäle zur besonders effiziente Ausnutzung des Übertragungskanals anzupassen und darüber hinaus eine durch die effiziente Ausnutzung des Übertragungskanals bewirkte Erhöhung der Datenrate der über die Signaldatenträger übertragenen Daten zu erzielen.

Vorzugsweise erzeugt die Sende-/Empfangseinrichtung die Störer. Zweckmäßigerweise sind die Sende-/Empfangseinrichtung und/oder das Endgerät dazu ausgebildet, das Übertragungsverhalten auf Basis der mit den Störern überlagerten Signalunterträger zu ermitteln.

Gemäß vorteilhafter Ausgestaltung wird zur Ermittlung des Übertragungsverhaltens der Unterkanäle eine Fehlererkennung vorzugsweise der Daten, welche mittels der Signalunterträger übertragen werden, durchgeführt. Die Fehlererkennung wird zweckmäßigerweise mittels Fehlererkennungsverfahren, insbesondere mittels zyklischer Redundanzprüfung CRC und/oder mittels ACK/NAK-Signale durchgeführt.

Für den Anwendungsfall der zyklischen Redundanzprüfung CRC sendet vorzugsweise das Endgerät eine aus den empfangenen Daten ermittelte Prüfsumme zur Fehlererkennung der Datenübertragung an die Sende-/Empfangseinrichtung zurück.

Für den Anwendungsfall der ACK/NAK-Signale sendet zweckmäßigerweise das Endgerät ein ACK-Signal (Bestätigung, Acknowledgement) an die Sende-/Empfangseinrichtung, um den Erhalt bzw. eine fehlerfreie Übertragung der mittels des Signalunterträgers übertragenen Daten zu bestätigen oder ein NAK-Signal (Nichtbestätigung, Negative Acknowledgement), um auf eine fehlerhafte Übertragung der Daten hinzuweisen. Vorzugsweise wird die Fehlererkennung in der Sende-/Empfangseinrichtung durchgeführt. Dafür werden die von der Sende-/Empfangseinrichtung an das Endgerät übertragenen Daten zumindest teilweise an die Sende-/Empfangseinrichtung zurückgeschickt. Dies geschieht vorzugsweise mittels Loopbacks, wodurch die Sende-/Empfangseinrichtung mit dem Übertragungskanal und dem Endgerät eine Art Schleifenschaltung, ein so genanntes Loopback, ausbildet. Dabei speist das Endgerät, um die Sende-/Empfangseinrichtung zu informieren, entweder das empfangene Signal zusammen mit den Daten oder lediglich ein Bestätigungssignal in die Schleifenschaltung ein.

In zweckmäßiger Weiterbildung wird aus der Fehlererkennung das Übertragungsverhalten der Unterkanäle durch Bestimmung der Bitfehlerrate aus dem Verhältnis der Anzahl fehlerhaft übertragener Datenbits zur Gesamtzahl der übertragenen Datenbits durch Bestimmung der Blockfehlerrate und/oder der Zellverlustrate ermittelt.

Dabei werden Bitfehlerrate, Blockfehlerrate und/oder die Zellverlustrate vorzugsweise von der Sende-/Empfangseinrichtung bestimmt.

Gemäß vorteilhafter Ausgestaltung sind zwischen der Sende-/Empfangseinrichtung und dem Endgerät mehrere Unterkanäle, insbesondere zur Ausbildung eines von einem Uplink-Kanal getrennten Downlink-Kanals, aufgebaut. Zweckmäßigerweise ist für jeden Signalunterträger ein Unterkanal vorgesehen.

Gemäß einer vorteilhaften Ausgestaltung sind zwischen den Teilbandbreitenbereichen Schutzbandbreitenbereiche auf dem Gesamtbandbreitenbereich vorgesehen. Die Schutzbandbreitenbereiche dienen zur Vermeidung von Überlappungen von Teilbandbreitenbereichen und zur Minimierung der gegenseitigen Beeinflussung zweier in benachbarten Teilbandbreitenbereichen untergebrachter Signalunterträger.

Gemäß vorteilhafter Ausgestaltung sind die Störer als Störsignal und/oder als Überlagerung mehrerer Störsignale, insbesondere als additives weißes gaußsches Rauschen, als moduliertes oder als kontinuierliches Signal ausgebildet. Die Störer unterscheiden sich zweckmäßigerweise in Frequenz, in der Bandbreite, der Amplitude und/oder in der Phase.

In zweckmäßiger Weiterbildung umfassen die von den Signalunterträgern belegten Teilbandbreitenbereiche unterschiedliche Bandbreiten. Vorzugsweise sind die Signalunterträger unterschiedlich moduliert und/oder kanalkodiert. Zweckmäßigerweise sind die von den Signalunterträgern übertragenen Datenraten unterschiedlich groß.

Vorzugsweise ist die Sende-/Empfangseinrichtung als Systemsimulator mit der Funktion der Erzeugung der Signalunterträger und vorzugsweise der Störer sowie der Ermittlung des Übertragungsverhaltens der Unterkanäle ausgeführt.

In zweckmäßiger Weiterbildung umfasst die Vorrichtung einen Störsignalgenerator zur Erzeugung der Störer, welcher zur Einkoppelung der Störer in den Übertragungskanal vorzugsweise im Funkkommunikationssystem integrierbar ist. Vorzugsweise ist der Störsignalgenerator als Vektorsignalgenerator ausgeführt.

Ein Ausführungsbeispiel der Erfindung wird nachfolgend unter Bezugnahme auf die Zeichnung näher beschrieben. In der Zeichnung zeigen:
- Fig. 1: schematisch das Funkkommunikationssystem mit Sende-/Empfangseinrichtung sowie Endgeräten und
- Fig. 2: einen Teilbandbreitenbereich umfassenden Gesamtbandbreitenbereich eines Übertragungskanals.

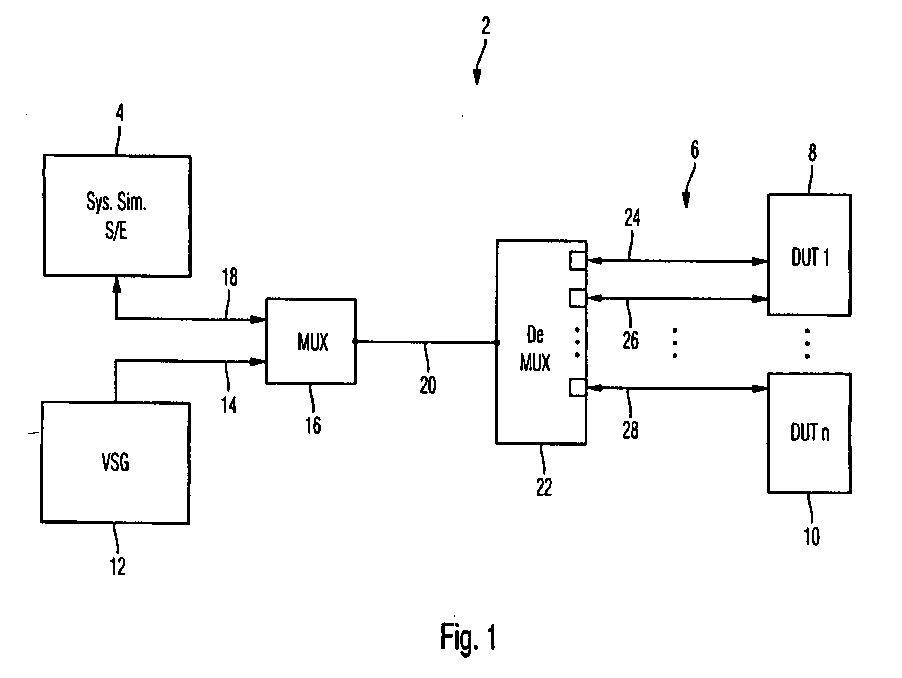

Fig. 1 zeigt eine Vorrichtung 2 mit einer Sende-/Empfangseinrichtung 4 und einem Funkkommunikationssystem 6 mit Endgeräten 8,10. Die Vorrichtung 2 umfasst gemäß dargestelltem Ausführungsbeispiel weiter einen Störsignalgenerator 12, welcher Störer in Form eines oder mehrerer überlagerter Störsignale, insbesondere Störrauschen, erzeugt und die Störer über eine Signalleitung 14 einem Multiplexer 16 zuführt. Der Multiplexer 16 mischt die Störer dem von der Sende-/Empfangseinrichtung 4 erzeugten, über eine Signalleitung 18 dem Multiplexer 16 zugeführten und Daten übertragenden Signalträger bei, welcher über eine Signalleitung 20 einem Demultiplexer 22 zur Verfügung gestellt wird. Der Demultiplexer 22 unterteilt den Signalträger auf mehrere Signalunterträger und bringt die Signalunterträger in Unterkanälen 24,26,28 eines im Funkkommunikationssystem 6 ausgebildeten Übertragungskanals unter.

Die Unterkanäle 24,26,28 bilden Funkverbindungen zwischen der Sende-/Empfangseinrichtung 4 und den Endgeräten 8,10 im Funkkommunikationssystem 6 aus. Die Endgeräte 8, 10 sind die zu testenden Geräte (Device under Test DUT). Dabei sind im Übertragungskanal zwei Unterkanäle 24,26 den Endgeräten 8,10 zugewiesen, wobei einer der Unterkanäle 24 als Uplink-Kanal und der andere Unterkanal 26 als Downlink-Kanal des Endgeräts 8 dient.

Zur Ermittlung des Übertragungsverhaltens der Unterkanäle 24,26,28 wird eine Fehlerkennung in dem dem jeweiligen Unterkanal 24,26,28 zugewiesenen Endgerät 8,10 und/oder in der Sende-/Empfangseinrichtung 4 durchgeführt.

Im ersten Fall wird die Fehlererkennung im Endgerät 8,10 mittels zyklischer Redundanzprüfung zur Erzeugung einer Prüfsumme und/oder mittels eines Verfahrens zur Erzeugung eines ACK-Signals (Bestätigungs-Signal) oder eines NAK-Signals (Nichtbestätigungs-Signal) durchgeführt, wobei die Prüfsumme bzw. das ACK-Signal oder das NAK-Signal der Sende-/Empfangseinrichtung 4 zur Auswertung der Fehlererkennung durch Bestimmung der Bitfehlerrate, der Blockfehlerrate und/oder der Zellverlustrate übermittelt werden.

Im zweiten Fall wird die Fehlererkennung durch die Sende-/Empfangseinrichtung 4 durchgeführt, wobei die Endgeräte 8,10 lediglich dazu dienen, die übertragenen Daten an die Sende-/Empfangseinrichtung 4 weiterzuleiten.

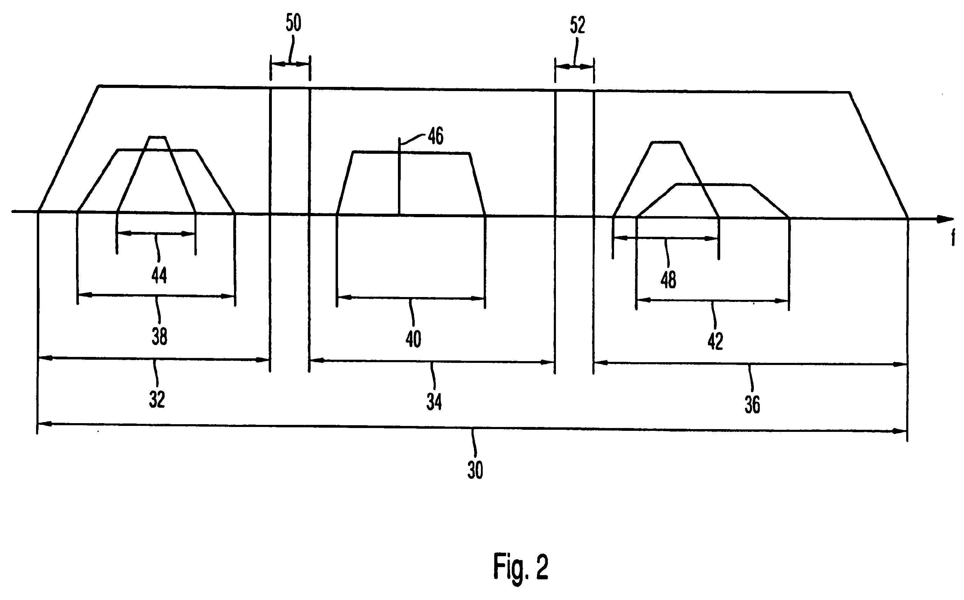

Fig. 2 zeigt die Ausbildung des Übertragungskanals in der Frequenz f. Dem Übertragungskanal ist ein Gesamtbandbreitenbereich 30 zugewiesen, welcher in Teilbandbreitenbereiche 32,34,36 unterteilt ist. In jedem Teilbandbreitenbereich 32,34,36 ist je ein Signalunterträger 38,40,42 untergebracht, welcher zugleich von einem Störer 44,46,48 überlagert ist. Dabei sind die Signalunterträger 38,40,42 sowie die Störer 44,46,48 derart bandbegrenzt, dass der jeweilige Signalunterträger 38,40,42 sowie der jeweilige Störer 44,46,48 lediglich den diesem zugewiesenen Teilbandbreitenbereich 32,34,36 belegt und um eine Bandbreite eines Schutzbandbreitenbereichs 50,52 vom benachbarten Teilbandbreitenbereich 32,34,36 beabstandet ist.

Dadurch, dass die Teilbandbreitenbereiche 32,34,36 in der Bandbreite einander nicht überlappen, ist das Übertragungsverhalten der von den Teilbandbreitenbereichen 32,34,36 belegten Unterkanäle 24,26,28 (siehe Fig. 1) für jeden einzelnen Unterkanal 24,26,28 durch gleichzeitige Untersuchung aller Unterkanäle 24,26,28 ermittelbar.

Dadurch wird eine besonders zügige Ermittlung des Übertragungsverhaltens der Unterkanäle des Übertragungskanals ermöglicht. Die simultane Durchführung der Untersuchung des Übertragungsverhaltens aller Unterkanäle ist selbst dann gewährleistet, wenn die in den Unterkanälen untergebrachten Signalunterträger mit verschiedenartigen Störern beaufschlagt sind.

Dabei können die mit den Störern überlagerten Signalunterträger verschiedenartig moduliert, als zeitkontinuierliche oder zeitdiskrete Signale ausgebildet sein und/oder unterschiedliche Signal-Rausch-Verhältnisse aufweisen. Des Weiteren kann die Kapazität der Datenraten der Signalunterträger unterschiedlich groß sein.

Die Erfindung ist nicht auf das in der Zeichnung dargestellte Ausführungsbeispiel, insbesondere nicht auf die im Ausführungsbeispiel gezeigte Aufteilung der Teilbandbreitenbereiche und der Schutzbandbreitenbereiche im Gesamtbandbreitenbereich, beschränkt. Alle vorstehend beschriebenen und in der Zeichnung dargestellten Merkmale sind beliebig miteinander kombinierbar.

## Patentansprüche

1. Vorrichtung (2) zur Ermittlung des Übertragungsverhaltens von Unterkanälen (24,26,28) eines Übertragungskanals in einem Funkkommunikationssystem (6), umfassend eine Sende-/Empfangseinrichtung (4), welche dazu ausgebildet ist, zum Aufbau des Übertragungskanals zwischen der Sende-/Empfangseinrichtung (4) und zumindest einem im Funkkommunikationssystem (6) vorgesehenen Endgerät (8,10) Daten übertragende Signalunterträger (38,40,42) zur Unterbringung von Unterkanälen (24,26,28) zu erzeugen und das Übertragungsverhalten der Unterkanäle (24,26,28) anhand der mit Störern (44,46,48) überlagerten Signalunterträger (38,40,42) zu ermitteln,
wobei jeder Unterkanal (24,26,28) einen separaten Teilbandbreitenbereich (32,34,36) eines Gesamtbandbreitenbereichs (30) des Übertragungskanals belegt,
wobei der Teilbandbreitenbereich (32) von anderen Teilbandbreitenbereichen (34,36) des Gesamtbandbreitenbereichs (30) in der Bandbreite beabstandet ist und
wobei die Vorrichtung einen Störsignalgenerator (12) aufweist, der Störer (44,46,48) in Form einer Überlagerung mehrerer Störsignale so aussendet, dass jeder Teilbandbreitenbereich (32,34,36) mit einem auf die entsprechende Bandbreite begrenzten Störsignal überlagert ist.

2. Vorrichtung nach Anspruch 1,
**dadurch gekennzeichnet,**
**dass** die Sende-/Empfangseinrichtung (6) und/oder das Endgerät (8,10) dazu ausgebildet sind, die Fehlererkennung der über die Signalunterträger (38,40,42) übermittelten Daten durchzuführen.

3. Vorrichtung nach Anspruch 2,
**dadurch gekennzeichnet,**
**dass** die Sende-/Empfangseinrichtung (6) dazu ausgebildet ist,
das Übertragungsverhalten der Unterkanäle (24,26,28) durch die Bestimmung der Bitfehlerrate, der Blockfehlerrate und/oder der Zellverlustrate aus der Fehlererkennung zu ermitteln.

4. Vorrichtung nach einem der Ansprüche 1 bis 3,
**dadurch gekennzeichnet,**
**dass** für jeden Signalunterträger (38,40,42) ein Unterkanal (24,26,28) vorgesehen ist.

5. Vorrichtung nach einem der Ansprüche 1 bis 4,
**dadurch gekennzeichnet,**
**dass** mit der Sende-/Empfangseinrichtung (4) mehrere Unterkanäle (24,26,28) aufgebaut sind.

6. Vorrichtung nach einem der Ansprüche 1 bis 5,
**dadurch gekennzeichnet,**
**dass** zur Beabstandung der Teilbandbreitenbereiche (32,34,36) zwischen diesen Schutzbandbreitenbereiche (50,52) vorgesehen sind.

7. Vorrichtung nach einem der Ansprüche 1 bis 6,
**dadurch gekennzeichnet,**
**dass** sich die Störer (44,46,48) in Frequenz, Amplitude und/oder Phase unterscheiden.

8. Vorrichtung nach einem der Ansprüche 1 bis 7,
**dadurch gekennzeichnet,**
**dass** die von den Signalunterträgern (38,40,42) belegten Teilbandbreitenbereiche (32,34,36) unterschiedliche Bandbreiten aufweisen.

9. Vorrichtung nach einem der Ansprüche 1 bis 8,
**dadurch gekennzeichnet,**
**dass** sich die Signalunterträger (38,40,42) in der Datenrate, in der Art der Modulation und/oder in der Art der Kanalkodierung voneinander unterscheiden.

10. Vorrichtung nach einem der Ansprüche 1 bis 9,
**dadurch gekennzeichnet,**
**dass** die Sende-/Empfangseinrichtung (4) ein Systemsimulator ist.

11. Vorrichtung nach einem der Ansprüche 1 bis 10,
**dadurch gekennzeichnet,**
**dass** der Störsignalgenerator (12) ein Vektorsignalgenerator ist.

12. Verfahren zur Ermittlung des Übertragungsverhaltens von Unterkanälen (24,26,28) eines Übertragungskanals in einem Funkkommunikationssystem (6),
wobei Daten umfassende Signalunterträger (38,42,44) zum Aufbau des Übertragungskanals im Funkkommunikationssystem (6) und zur Unterbringung von Unterkanälen (24,26,28) des Obertragungskanals erzeugt wer den,
wobei das Übertragungsverhalten der Unterkanäle (24,26,28) anhand der mit Störern (44,46,48) überlagerten Signalunterträger (38,40,42) ermittelt wird,
wobei jeder Unterkanal (24,26,28) einen separaten Teilbandbreitenbereich (32,34,36) eines Gesamtbandbreitenbereichs (39) des Übertragungskanals belegt,
wobei der Teilbandbreitebereich (32) von anderen Teilbandbreitenbereichen (34,36) des Gesamtbandbreitenbereichs (30) in der Bandbreite beabstandet ist und
wobei ein Störsignalgenerator (12) Störer (44,46,48) in Form einer Überlagerung mehrerer Störsignale so aussendet, dass jeder Teilbandbreitenbereich (32,34,36) mit einem auf die entsprechende Bandbreite begrenzten Störsignal überlagert ist.

13. Verfahren nach Anspruch 12,
**dadurch gekennzeichnet,**
**dass** zur Ermittlung des Übertragungsverhaltens eine Fehlererkennung der Daten, welche über die Signalunterträger (38,40,42) übertragen werden, mittels zyklischer Redundanzprüfung und/oder mittels Bestätigungs-/Nichtbestätigungs-Signalen (ACK/NAK) durchgeführt wird, wobei die Bestätigungs-/Nichtbestätigungs-Signale (ACK/NAK) von einem Endgerät (8,10) zum Empfang der über die Signalunterträger (38,40,42) übertragenen Daten erzeugt und an eine Sende-/Empfangseinrichtung (4), wovon die Endgeräte (8,10) die Daten erhalten, übertragen werden.

14. Verfahren nach Anspruch 13,
**dadurch gekennzeichnet,**
**dass** das Übertragungsverhalten der Unterkanäle (24,26,28) durch die Bestimmung der Bitfehlerrate, der Blockfehlerrate und/oder der Zellverlustrate aus der Fehlererkennung ermittelt wird.

## Claims

1. A device (2) for determining the transmission performance of sub-channels (24, 26, 28) of a transmission channel in a radio-communication system (6), comprising a transmission/reception device (4), which is formed, for the setup of the transmission channel between the transmission/reception device (4) and at least one terminal device (8, 10) provided in the radio-communication system (6), in order to generate data-transmitting signal sub-carriers (38, 40, 42) for the accommodation of sub-channels (24, 26, 28), and in order to determine the transmission performance of the sub-channels (24, 26, 28) on the basis of the signal sub-carriers (38, 40, 42) superposed with the interferers (44, 46, 48), wherein each sub-channel (24, 26, 28) occupies a separate bandwidth sub-range (32, 34, 36) of a total bandwidth range (30) of the transmission channel,
wherein the bandwidth sub-range (32) is distanced within the bandwidth from other bandwidth sub-ranges (34, 36) of the total bandwidth range (30) and
wherein the device comprises an interference-signal generator (12), which transmits interferers (44, 46, 48) in the form of a superposition of several interference signals in such a manner that each bandwidth sub-range (32, 34, 36) is superposed with an interference signal limited to the corresponding bandwidth.

2. The device according to claim 1,
**characterised in that**
the transmission/reception device (6) and/or the terminal device (8, 10) are formed in order to implement the error detection of the data communicated via the signal sub-carrier (38, 40, 42).

3. The device according to claim 2,
**characterised in that**
the transmission/reception device (6) is formed in order to determine the transmission performance of the sub-channels (24, 26, 28) by measuring the bit-error rate, the block-error rate and/or the cell-loss rate from the error detection.

4. The device according to any one of claims 1 to 3,
**characterised in that**
a sub-channel (24, 26, 28) is provided for every signal sub-carrier (38, 40, 42).

5. The device according to any one of claims 1 to 4,
**characterised in that**
several sub-channels (24, 26, 28) are set up with the transmission/reception device (4).

6. The device according to any one of claims 1 to 5,
**characterised in that**,
for the distancing of the bandwidth sub-ranges (32, 34, 36), protective bandwidth ranges (50, 52) are provided between the latter.

7. The device according to any one of claims 1 to 6,
**characterised in that**
the interferers (44, 46, 48) differ in frequency, amplitude and/or phase.

8. The device according to any one of claims 1 to 7,
**characterised in that**
the bandwidth sub-ranges (32, 34, 36) occupied by the signal sub-carriers (38, 40, 42) provide different bandwidths.

9. The device according to any one of claims 1 to 8,
**characterised in that**
the signal sub-carriers (38, 40, 42) differ from one another in the data rate, in the type of modulation and/or in the type of channel coding.

10. The device according to any one of claims 1 to 9,
**characterised in that**
the transmission/reception device (4) is a system simulator.

11. The device according to any one of claims 1 to 10,
**characterised in that**
the interference-signal generator (12) is a vectorial-signal generator.

12. A method for determining the transmission performance of sub-channels (24, 26, 28) of a transmission channel in a radio-communication system (6),
wherein data-comprising signal sub-carriers (38, 42, 44) are generated for the setup of the transmission channel within the radio-communication system (6) and for the accommodation of sub-channels (24, 26, 28) of the transmission channel, wherein the transmission performance of the sub-channels (24, 26, 28) is determined on the basis of the signal sub-carriers (38, 40, 42) superposed with the interferers (44, 46, 48),
wherein every sub-channel (24, 26, 28) occupies a separate bandwidth sub-range (32, 34, 36) of a total bandwidth range (39) of the transmission channel,
wherein the bandwidth sub-range (32) is distanced within the bandwidth from other bandwidth sub-ranges (34, 36) of the total bandwidth range (30) and
wherein an interference-signal generator (12) transmits interferers (44, 46, 48) in the form of a superposition of several interference signals in such a manner that each bandwidth sub-range (32, 34, 36) is superposed with an interference signal limited to the corresponding bandwidth.

13. The method according to claim 12,
**characterised in that**,
in order to determine the transmission performance, an error detection of the data, which are transmitted via the signal sub-carrier (38, 40, 42), is implemented by means of cyclical redundancy checking and/or by means of acknowledgement/negative-acknowledgement signals (ACK/NAK),
wherein the acknowledgement/negative-acknowledgement signals (ACK/NAK) are generated by a terminal device (8, 10) for the reception of the data transmitted via the signal sub-carriers (38, 40, 42) and transmitted to a transmission/reception device (4), from which the terminal devices (8, 10) receive the data.

14. A method according to claim 13,
**characterised in that**
the transmission performance of the sub-channels (24, 26, 28) is determined by measuring the bit-error rate, the block-error rate and/or the cell-loss rate from the error detection.

## Revendications

1. Dispositif (2) pour la détermination du comportement de transmission de canaux secondaires (24, 26, 28) d'un canal de transmission dans un système de radiocommunication (6), comprenant un dispositif émetteur/récepteur (4), lequel est destiné, pour l'établissement du canal de transmission entre le dispositif émetteur/récepteur (4) et au moins un terminal (8, 10) prévu dans le système de radiocommunication (6), à générer des sous-porteuses de signaux (38, 40, 42) transmettant des données pour le placement de canaux secondaires (24, 26, 28) et à déterminer le comportement de transmission des canaux secondaires (24, 26, 28) sur la base des sous-porteuses de signaux (38, 40, 42) brouillées par des parasites (44, 46, 48),
où chaque canal secondaire (24, 26, 28) occupe une région de bande passante (32, 34, 36) séparée d'une bande passante globale (30) du canal de transmission,
où la région de bande passante (32) est distante dans la largeur de bande d'autres régions de bande passante (34, 36) de la bande passante globale (30), et
où le dispositif comporte un générateur de signaux parasites (12), lequel émet des parasites (44, 46, 48) sous la forme d'un brouillage de plusieurs signaux parasites, de manière à brouiller chaque région de bande passante (32, 34, 36) avec un signal parasite limité à la largeur de bande correspondante.

2. Dispositif selon la revendication 1,
**caractérisé**
**en ce que** le dispositif émetteur/récepteur (4) et/ou le terminal (8, 10) sont prévus pour effectuer la détection d'erreurs des données transmises par les sous-porteuses de signaux (38, 40, 42).

3. Dispositif selon la revendication 2,
**caractérisé**
**en ce que** le dispositif émetteur/récepteur (4) est prévu pour déterminer le comportement de transmission des canaux secondaires (24, 26, 28) par détermination des taux d'erreurs sur les bits, des taux d'erreurs sur les blocs et/ou des taux de pertes de cellules à partir de la détection d'erreurs.

4. Dispositif selon l'une des revendications 1 à 3,
**caractérisé**
**en ce qu'**un canal secondaire (24, 26, 28) est prévu pour chaque sous-porteuse de signaux (38, 40, 42).

5. Dispositif selon l'une des revendications 1 à 4
**caractérisé**
**en ce que** plusieurs canaux secondaires (24, 26, 28) sont établis avec le dispositif émetteur/récepteur (4).

6. Dispositif selon l'une des revendications 1 à 5,
**caractérisé**
**en ce que** des plages de protection de bande (50, 52) sont prévues entre les régions de bande passante (32, 34, 36) pour l'espacement de celles-ci.

7. Dispositif selon l'une des revendications 1 à 6,
**caractérisé**
**en ce que** les parasites (44, 46, 48) se distinguent par leur fréquence, leur amplitude et/ou leur phase.

8. Dispositif selon l'une des revendications 1 à 7,
**caractérisé**
**en ce que** les régions de bande passante (32, 34, 36) occupées par les sous-porteuses de signaux (38, 40, 42) ont des largeurs de bande différenciées.

9. Dispositif selon l'une des revendications 1 à 8,
**caractérisé**
**en ce que** les sous-porteuses de signaux (38, 40, 42) se distinguent entre elles par le débit de données, le type de modulation et/ou le type de codage de canal.

10. Dispositif selon l'une des revendications 1 à 9,
**caractérisé**
**en ce que** le dispositif émetteur/récepteur (4) est un simulateur de système.

11. Dispositif selon l'une des revendications 1 à 10,
**caractérisé**
**en ce que** le générateur de signaux parasites (12) est un générateur de signaux vectoriels.

12. Procédé de détermination du comportement de transmission de canaux secondaires (24, 26, 28) d'un canal de transmission dans un système de radiocommunication (6),
où des sous-porteuses de signaux (38, 42, 44) comprenant des données sont générées pour l'établissement du canal de transmission dans le système de radiocommunication (6) et pour le placement dans les canaux secondaires (24, 26, 28) du canal de transmission,
où le comportement de transmission des canaux secondaires (24, 26, 28) est déterminé sur la base de sous-porteuses signaux (38, 40, 42) brouillées par des parasites (44,46,48) ,
où chaque canal secondaire (24, 26, 28) occupe une région de bande passante (32, 34, 36) séparée d'une bande passante globale (39) du canal de transmission,
où la région de bande passante (32) est distante d'autres régions de bande passante (34, 36) de la bande passante globale (30) dans la largeur de bande, et
où un générateur de signaux parasites (12) émet des parasites (44, 46, 48) sous la forme d'un brouillage de plusieurs signaux parasites, de manière à brouiller chaque région de bande passante (32, 34, 36) avec un signal parasite limité à la largeur de bande correspondante.

13. Procédé selon la revendication 12,
**caractérisé**
**en ce que**, pour la détermination du comportement de transmission, une détection d'erreurs des données transmises par les sous-porteuses de signaux (38, 40, 42) est effectuée au moyen d'un contrôle de redondance cyclique et/ou au moyen de signaux de confirmation/non-confirmation (ACK/NAK), lesdits signaux de confirmation/non-confirmation (ACK/NAK) étant générés par un terminal (8, 10) pour la réception des données transmises par les sous-porteuses de signaux (38, 40, 42) et transmis à un dispositif émetteur/récepteur (4) duquel les terminaux (8, 10) reçoivent les données.

14. Procédé selon la revendication 13,
**caractérisé**
**en ce que** le comportement de transmission des canaux secondaires (24, 26, 28) est déterminé par détection des taux d'erreurs sur les bits, des taux d'erreurs sur les blocs et/ou des taux de pertes de cellules à partir de la détection d'erreurs.
